Europäisches Patentamt

(19) European Patent Office                    (11) Publication number:        **0 171 481**

Office européen des brevets                                              **B1**

(12)                    **EUROPEAN PATENT SPECIFICATION**

(45) Date of publication of patent specification: **01.02.89**    (51) Int. Cl.⁴: **F 16 B 2/08**

(21) Application number: **84402452.1**

(22) Date of filing: **30.11.84**

---

(54) **Improved clamping collar.**

---

(30) Priority: **09.08.84 ES 281033**

(43) Date of publication of application:
**19.02.86 Bulletin 86/08**

(45) Publication of the grant of the patent:
**01.02.89 Bulletin 89/05**

(84) Designated Contracting States:
**AT BE CH DE FR GB IT LI LU NL SE**

(56) References cited:
**FR-A-2 532 999**
**GB-A-1 548 760**
**GB-A-2 122 051**
**GB-A-2 122 247**

(73) Proprietor: **MIKALOR, S.A.**
**No. 60-66 Paseo Can feu**
**Sabadell Barcelona (ES)**

(72) Inventor: **Verges, Jaime Montaner**
**No. 51 José Renom Street**
**Sabadell, Barcelona (ES)**

(74) Representative: **Chameroy, Claude et al**
**c/o Cabinet Malemont 42, avenue du Président**
**Wilson**
**F-75116 Paris (FR)**

Courier Press, Leamington Spa, England.

## Description

The present invention refers to a clamping collar of the type comprising a hooped band, one end of which is associated with a support for an endless screw, provided for meshing in teeth stamped at the opposite end of said hooped band, said support being formed by a portion having a U shaped section with entrant portions which are fitted into a neck of the screw for providing the necessary support for same.

Such a clamping collar is disclosed for example in US—A—4 099 304.

The improvement provided by the invention concerns specifically the means for fixing the support of the screw to the hooped band, which means provide substantial advantages which improve the functioning and efficiency of the clamping collar.

According to the invention, the lower part of the support comprises two first lugs, bent forwards in a curve so as to prevent the teeth of the band from being damaged on application of a tightening torque to the screw, whereas the bend in the transverse direction is slanted, so as to facilitate removal of the band.

For facilitating the explanation, the present description refers to the accompanying drawing in which one embodiment of the invention is shown by way of example.

In the drawing:

Figure 1 corresponds to a longitudinal section in detail of the means for fixing the screw support to the band,

Figure 2 is a section through A—A of figure 1.

Figure 3 shows a section through B—B of figure 1.

Figure 4 is a top view of the detail shown in figure 1.

Figure 5 corresponds to the lower plan view of the means for fixing the support to the band.

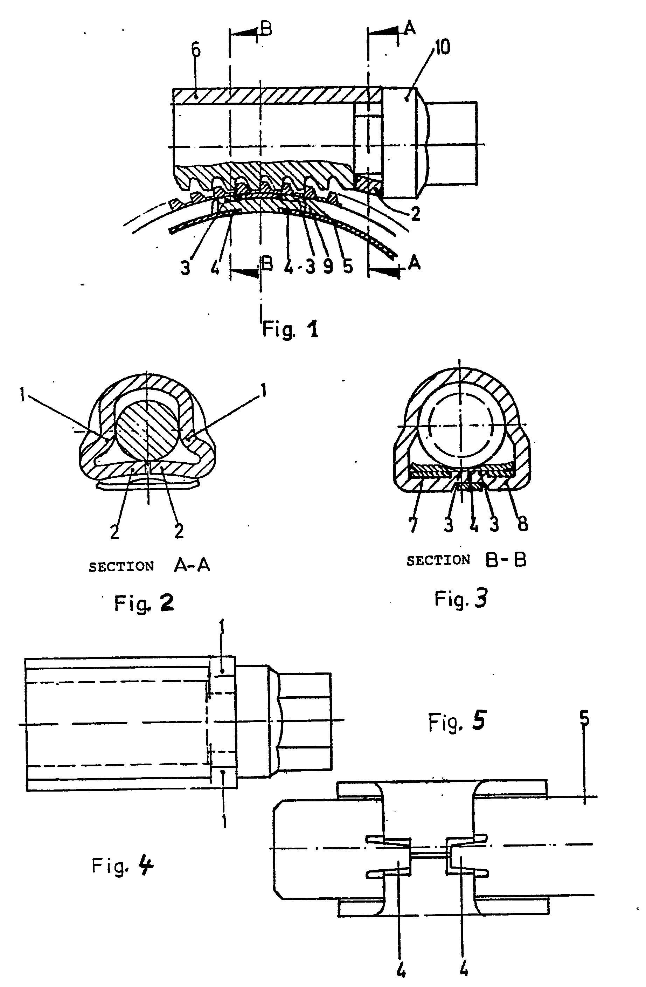

Referring to the figures, a support 6 can be seen which is characterized by having one end free and the other end semi-closed, according to the shape shown in section A—A of figure 2. The sides of said shape are obtained by shearing two strips of material (see figure 4, plan view and in section A—A in figure 2) at the end, thus providing two entrant portions 1 which give to the screw support a great rigidity and which serve at the same time for preventing the screw 10 from coming out rearwardly on slackening the collar, by introducing said entrant portions in the neck of the screw.

The lower part is obtained by bending two first lugs 2, see figures 1 and 2, previously cut out. Bending in the front direction, follows a curve as can be seen in figure 2 for supporting through a neck of the screw the general logic reactions when applying a working tightening torque to the hexagonal head of the screw, avoiding damage to the teeth of the band 5.

The bend in the transverse direction is slanted so as to facilitate removal of the band, see figure 1.

Said first lugs provide the three following working functions:

The first is that of supporting the head of the endless screw, improving to a large extent the efficiency of the clamping collar; when applying a tightening torque by means of a hexagonal wrench the head of the screw does not slant downwards in a plane which coincides with its longitudinal axis, for in fact it does not generate the friction typical of conventional systems between the head of the screw and the grooved teeth or serrations of the band causing loss of efficiency of the whole.

The second is that of increasing the bearing surface of the head of the screw and preventing this latter from penetrating into the support.

The third is that of avoiding the tendency which the band has of rotating in a clockwise direction as a consequence of the forces generated by the screw on the band.

The assembly of the support with the band is mechanical. This is achieved by fitting the four retaining tabs 3 (figure 1 and figure 3, section B—B) of the feet of the support into a housing provided in the band 5 and subsequently bending the further lugs 4 of the band over the hollows created when producing the tabs of the feet of the support, thus obtaining complete assembly between band and support.

The purpose of tabs 3 is that of supporting the lateral stresses produced by the band on the support, as a consequence of this latter withstanding the action of the endless screw on tightening the collar.

The further lugs 4 (figure 1, figure 3 and figure 5) serve together with the retaining tabs 3 for preventing support 6 from moving forwards as a consequence of the stress created by the screw on same when tightening the band in the opposite direction. Another advantage of the further lugs 4 is that of providing perfect closure of the hollows 9, see figure 1, which remain between the support and the band, because of the continuity of the curvature of the band.

The notches of the housing for the retaining tabs 3 in the band are offset the same as second lugs 7, 8 of the support as can be seen in section B—B of figure 3.

This offset is provided for compensating the different forces which act not only on the second lugs 7, 8 of the support but also on the band.

On the outer edge of lug 7, a traction force is exerted following the rotary torque transmitted by the screw to support 6. Said force tends to cause said lug to rotate on the outer edge of the band producing a twist on said band. It is evident that as the distance between the edge of the band and the retaining tabs increases, the resistant torque will be greater at the same time as the section of the band subjected to twisting will be greater, resulting in a better rigidity of the system.

At the same time, because of said offset, the retaining tab of lug 7 remains situated in the same zone in the centre of the screw, which prevents the retaining tab 3 from coming out of its housing resulting from the torque applied; the screw has a downward action on the side of its head promoting better retention of tab 3 between the band and a rubber sleeve.

## Claims

1. Clamping collar of the type comprising a hooped band (5), one end of which is associated with a support (6) for an endless screw (10), provided for meshing in teeth stamped at the opposite end of said hooped band, said support being formed by a portion having a U shaped section (6) with entrant portions (1) which are fitted into a neck of the screw (10) for providing the necessary support for same, characterized in that the lower part of the support comprises two first lugs (2), bent forwards in a curve so as to prevent the teeth of the band from being damaged on application of a tightening torque to the screw, whereas the bend in the transverse direction is slanted, so as to facilitate removal of the band.

2. Clamping collar according to claim 1, characterized in that the assembly of the support (6) with the band (5) is achieved through a mechanical arrangement which comprises four retaining tabs (3) provided on second lugs (7, 8) of the support, which are introduced into a housing of the band (5) and on which tabs are clamped two further lugs (4) of the band, which are placed in hollows formed by said retaining tabs.

3. Clamping collar according to claim 2, characterized in that the housing for the retaining tabs (3) in the band is in the form of notches which are offset, the same as the second lugs (7, 8) of the support, so as to compensate for the different forces which act on the second lugs (7, 8) of the support and on the band.

## Patentansprüche

1. Klemmband, bestehend aus einem (Reif-)Band (5), dessen einem Ende ein Tragelement (6) für eine Schnecke (10) zugeordnet ist, die in Eingriff mit in dem gegenüberliegenden Ende dieses (Reif-)Bandes eingeprägten Zähnen steht, dieses Tragelement aus einem Teil mit U-förmigen Querschnitt (6) gebildet ist, mit Eintritts-Bereichen (1), die in einen Führungshals der Schnecke (10) zur Abstützung derselben passend eingreifen, dadurch gekennzeichnet, daß der untere Teil des Tragelements zwei erste Ansätze (2) aufweist, die nach vorn in einer Kurve abgebogen sind, um so eine Beschädigung der Zähne zu verhindern, wenn auf die Schnecke ein Anzugsmoment ausgeübt wird, wohingegen der Bogen in der transversalen Richtung zum Entfernen des Bandes abgeschrägt ist.

2. Klemmband nach Anspruch 1, dadurch gekennzeichnet, daß das Zusammenstecken des Tragelements (6) mit dem Band (5) mittels einer mechanischen Anordnung erreicht wird, die aus vier an zweiten Ansätzen (7, 8) des Tragelements vorgesehenen Haltelappen (3) besteht, die in eine Aufnahme des Bandes (5) eingeführt werden und an welchen Lappen zwei weitere Ansätze (4) des Bandes eingespannt sind, die in von diesen Haltelappen gebildeten Aussparungen plaziert sind.

3. Klemmband nach Anspruch 2, dadurch gekennzeichnet, daß die Aufnahme für die Haltelappen (3) in dem Band in Form von Ausnehmungen ausgebildet ist, die versetzt angeordnet sind, in gleicher Weise wie die zweiten Ansätze (7, 8) des Tragelements, um so für die auf die zweiten Ansätze (7, 8) des Tragelements und auf das Band einwirkenden unterschiedlichen Kräfte zu kompensieren.

## Revendications

1. Collier de serrage du type comportant une bande en anneau (5) dont une extrémité est associée à un support (6) destiné à une vis sans fin (10) conçue pour s'engrener avec des dents estampées au niveau de l'extrémité opposée de ladite bande en anneau, ledit support comprenant une partie qui présente une section en forme de U (6) pourvue de parties rentrantes (1) emboîtées dans un collet de la vis (10) pour assurer le support nécessaire à celle-ci, caractérisé en ce que la portion inférieure du support possède deux premiers talons (2) pliés vers l'avant en courbe, de manière à empêcher une détérioration de la bande lors de l'application d'un couple de serrage sur la vis, le pliage étant incliné dans la direction transversale, afin de faciliter le retrait de la bande.

2. Collier de serrage selon la revendication 1, caractérisé en ce que l'assemblage du support (6) et de la bande (5) est réalisé grâce à un dispositif mécanique qui comprend quatre pattes de retenue (3) prévues sur des seconds talons (7, 8) du support, introduites dans un logement de la bande (5) et sur lesquelles sont serrés deux autres talons (4) de la bande placés dans des creux définis par lesdites pattes de retenue.

3. Collier de serrage selon la revendication 2, caractérisé en ce que le logement prévu pour les pattes de retenue (3) dans la bande, se présente sous la forme d'encoches qui sont décalées de la même façon que les seconds talons (7, 8) du support, afin de compenser les différentes forces qui s'exercent sur les seconds talons (7, 8) du support et sur la bande.

Fig. 1

SECTION A-A

Fig. 2

SECTION B-B

Fig. 3

Fig. 5

Fig. 4